# EUROPEAN PATENT APPLICATION

(11) **EP 1 886 583 A1**
(43) Date of publication of application: **13.02.2008**
(21) Application number: 06756424.5
(22) Date of filing: 22.05.2006
(51) Int. Cl.: A23L 1/24

(54) **ACIDIC OIL DROPLET-IN-WATER TYPE EMULSION AND APPLICATION THEREOF TO FOODS**

(30) Priority: 23.05.2005 JP 2005150000
(71) Applicant: SAN-EI GEN F.F.I., INC., Toyonaka-shi, Osaka 561-8588 (JP)
(72) Inventor: IDO, Takao c/o SAN-EI GEN F.F.I., INC.,, 5618588 (JP); KATAYAMA, Tsuyoshi c/o SAN-EI GEN F.F.I.,, 5618588 (JP)
(74) Representative: Müller-Boré & Partner Patentanwälte
(86) International application number: PCT/JP2006/310118
(87) International publication number: WO 2006/126472

(57) **Abstract**

An object of the present invention is to provide acidic oil-in-water emulsified foods with enhanced microwave resistance, heat resistance, or freezing and thawing resistance, and low- or non-cholesterol acidic oil-in-water emulsified foods containing reduced amounts of or no egg yolk at all. The acidic oil-in-water emulsified foods can be prepared by emulsifying water-phase ingredients and oil-phase ingredients into acidic oil-in-water emulsions using gum ghatti or gum ghatti and xanthan gum.

## Description

### TECHNICAL FIELD

The present invention relates to acidic oil-in-water emulsions and a method for preparing the same. More particularly, the invention relates to acidic oil-in-water emulsions suitable as acidic oil-in-water emulsified foods (hereinafter simply referred to as "acidic emulsified foods"), and especially, semi-solid, pasty, or liquid acidic oil-in-water emulsified seasonings (hereinafter simply referred to as "acidic emulsified seasonings"), and a method for preparing the same. Moreover, the invention relates to acidic oil-in-water emulsions having microwave resistance, heat resistance, or freezing and thawing resistance, and a method for preparing the same. These acidic oil-in-water emulsions, by virtue of any of these properties, can be suitably used as acidic emulsified seasonings for cooking with a microwave oven or with heat, and for frozen foods. In addition, the invention relates to acidic oil-in-water emulsions that are suitable as low-cholesterol, non-cholesterol, or non-allergenic acidic emulsified seasonings, and a method for preparing the same.

Furthermore, the invention relates to a method for imparting microwave resistance, heat resistance, or freezing and thawing resistance to, or enhancing any of these properties of, acidic emulsified foods, and especially acidic emulsified seasonings.

### BACKGROUND ART

Owing to the diversification of dietary habits, acidic emulsified foods such as acidic emulsified seasonings, including dressings, dressing-type seasonings and the like, have been increasingly used as ingredients of heat-processed foods such as pizza, specialty and filled pastries, *okonomiyaki* (thin and flat pancake cooked on a hot plate with bits of meat, seafood and chopped cabbages) and *takoyaki* (Japanese dumplings filled with octopus), and as ingredients of frozen foods. Therefore, acidic emulsified foods having microwave resistance, heat resistance, or freezing and thawing resistance are in demand.

As techniques for imparting heat resistance to mayonnaise, a method that comprises using egg yolk treated with phospholipase A as an emulsifier (egg yolk lisolecithin) (see, for example, Patent Document 1), and a method that comprises using lysophospholipid as an emulsifier (see, for example, Patent Document 2) have been proposed. Egg yolk lisolecithin, however, has the drawbacks of being troublesome to prepare, and posing a risk of microbial contamination. Lysophospholipid also has the drawbacks of being difficult to handle because it is liable to moisture absorption and takes time to dissolve, and posing a risk of adversely affecting food flavors due to its characteristic flavor.

Mayonnaise is an acidic emulsified food in which a water-phase ingredient and an oil-phase ingredient are stably emulsified by using the emulsifiability of egg yolk, and generally contains about 17% egg yolk. Since lifestyle-related diseases have become social problems today, low-cholesterol or non-cholesterol mayonnaise-like foods which contain reduced amounts of egg yolk or no egg yolk are in demand to meet the needs of health-conscious consumers. In addition, mayonnaise-like foods prepared without eggs that can be eaten safely by individuals who are allergic to eggs are also in demand.

Low-cholesterol, mayonnaise-like foods that substitute xanthan gum, modified starches, and the like for fats and oils are commercially available. These mayonnaise-like foods, however, have the drawbacks of poor stability and reduced taste and flavor due to reduced amounts of oil. Moreover, a method that comprises using egg yolk subjected to supercritical carbon dioxide treatment for removing cholesterol (see, for example, Patent Document 3), and a method that comprises using soy milk or soybean protein instead of egg yolk (see, for example, Patent Document 4) have been proposed. Both of these methods, however, have resulted in poor emulsion stability, and include the use of an allergenic substance.
Patent Document 1: JP 1976-84785 A
Patent Document 2: JP 2000-60420 A
Patent Document 3: JP 1999-137209 A
Patent Document 4: JP 2004-350525 A

### DISCLOSURE OF THE INVENTION

### PROBLEMS TO BE SOLVED BY THE INVENTION

An object of the invention is to provide acidic oil-in-water emulsions that can be suitably used as acidic emulsified foods, more particularly as acidic emulsified seasonings, with microwave resistance, heat resistance, or freezing and thawing resistance, in order to meet the diversification of dietary habits. Another object of the invention is to provide acidic oil-in-water emulsions that can be suitably used as low- or non-cholesterol acidic emulsified foods containing reduced amounts of or no egg yolk, more particularly acidic emulsified seasonings, in order to meet health-conscious needs.

Still another object of the invention is to provide a method for imparting microwave resistance, heat resistance, or freezing and thawing resistance to acidic emulsified foods, and especially acidic emulsified seasonings, or to provide a method for enhancing any of these properties of acidic emulsified foods, in order to meet the diversification of dietary habits.

### MEANS FOR SOLVING THE PROBLEMS

The inventors carried out research day and night to achieve the aforementioned objects, and found that using gum ghatti as an emulsifier in the preparation of acidic oil-in-water emulsions, the emulsion stability of these emulsions can be enhanced; and microwave resistance, heat resistance, or freezing and thawing resistance can be imparted to these emulsions. Moreover, the inventors found that although low- or non-cholesterol acidic emulsified foods containing reduced amounts of egg yolk or no egg yolk generally have reduced emulsion stability, the emulsion stability of these emulsified foods can be enhanced by using gum ghatti in the preparation of these emulsified foods. Furthermore, the inventors found that these effects of gum ghatti can be reinforced by using gum ghatti together with other polysaccharide thickener(s), especially xanthan gum.

These findings led to the completion of the invention. The invention includes embodiments as summarized below.
(1) Acidic Oil-in-Water Emulsion and Method for Preparing the Same
   (1-1) An acidic oil-in-water emulsion comprising gum ghatti.
   (1-2) The acidic oil-in-water emulsion according to item (1-1), further comprising xanthan gum.
   (1-3) The acidic oil-in-water emulsion according to item (1-1) or (1-2), comprising 10 to 90 wt% of fats and oils.
   (1-4) The acidic oil-in-water emulsion according to any of items (1-1) to (1-3), having a pH of 2.5 to 5.
   (1-5) The acidic oil-in-water emulsion according to any of items (1-1) to (1-4), having a median size of 20 µm or less.
   (1-6) The acidic oil-in-water emulsion according to any of items (1-1) to (1-5), comprising a food ingredient.
   (1-7) The acidic oil-in-water emulsion according to any of items (1-1) to (1-6), comprising a seasoning ingredient.
(2) Application of Acidic Oil-in-Water Emulsion to Emulsified Food
   (2-1) An acidic emulsified food comprising an acidic oil-in-water emulsion as defined in any of items (1-1) to (1-7).
   (2-2) The acidic emulsified food according to item (2-1), which is an acidic emulsified seasoning.
   (2-3) The acidic emulsified food according to item (2-1), which is a liquid, semi-solid, or pasty acidic emulsified seasoning.
   (2-4) The acidic emulsified food according to item (2-1), which is an emulsified dressing.
   (2-5) The acidic emulsified food according to any of items (2-1) to (2-4), wherein the cholesterol content is 0 to 20 mg/100 g.
   (2-6) The acidic emulsified food according to any of items (2-1) to (2-4), wherein the cholesterol content is 0 to 5 mg/100 g.
   (2-7) The acidic emulsified food according to any of items (2-1) to (2-4), which is free of cholesterol.
   (2-8) The acidic emulsified food according to any of items (2-1) to (2-7), which exhibits microwave resistance and heat resistance, and is used for cooking with a microwave oven or cooking with heat.
   (2-9) The acidic emulsified food according to item (2-8), which is an acidic emulsified seasoning.
   (2-10) A food for cooking with a microwave oven or cooking with heat, comprising an acidic emulsified food according to item (2-8) or (2-9).
   (2-11) The acidic emulsified food according to any of items (2-1) to (2-7), which exhibits freezing and thawing resistance, and is used as a frozen food.
   (2-12) The acidic emulsified food according to item (2-11), which is an acidic emulsified seasoning.
   (2-13) A frozen food comprising an acidic emulsified food as defined in item (2-11) or (2-12).
   (2-14) A method for preparing an acidic emulsified food that exhibits microwave resistance, heat resistance, or freezing and thawing resistance; the method comprising using gum ghatti or gum ghatti and another polysaccharide thickener as emulsifiers in preparing an acidic emulsified food in which a water-phase ingredient and an oil-phase ingredient are emulsified to form an oil-in-water emulsion.
(3) Method for Imparting or Enhancing Microwave Resistance or Heat Resistance
   (3-1) A method for imparting microwave resistance or heat resistance to, or enhancing the microwave resistance or heat resistance of, an acidic emulsified food in which a water-phase ingredient and an oil-phase ingredient are emulsified to form an oil-in-water emulsion; the method comprising using gum ghatti or gum ghatti and another polysaccharide thickener as emulsifiers.
   (3-2) The method according to item (3-1), wherein the polysaccharide thickener is xanthan gum.
   (3-3) The method according to item (3-1) or (3-2), wherein the acidic emulsified food is an acidic emulsified seasoning.
(4) Method for Imparting or Enhancing Freezing and Thawing Resistance
   (4-1) A method for imparting freezing and thawing resistance to, or enhancing the freezing and thawing resistance of, an acidic oil-in-water emulsified food in which a water-phase ingredient and an oil-phase ingredient are emulsified to form an oil-in-water emulsion; the method comprising using gum ghatti or gum ghatti and another polysaccharide thickener as emulsifiers.
   (4-2) The method according to item (4-1), wherein the polysaccharide thickener is xanthan gum.
   (4-3) The method according to item (4-1) or (4-2), wherein the acidic emulsified food is an acidic emulsified seasoning.

### EFFECTS OF THE INVENTION

The acidic oil-in-water emulsions according to the invention are prepared by emulsifying water-phase ingredients and oil-phase ingredients, using gum ghatti or gum ghatti and other polysaccharide thickeners such as xanthan gum. The emulsion stability of acidic emulsified foods that are cholesterol-free or contain a small amount of cholesterol (i.e., not containing egg yolk or containing a reduced amount of egg yolk) can be enhanced by emulsification using gum ghatti or gum ghatti and other polysaccharide thickeners. The invention thus provides non-cholesterol (egg allergen-free) or low-cholesterol acidic emulsified seasonings that are free of cholesterol or contain a small amount of cholesterol (i.e., does not contain egg yolk, or contain a reduced amount of egg yolk).

Moreover, microwave resistance, heat resistance, or freezing and thawing resistance can be imparted to acidic emulsified foods by emulsification using gum ghatti or gum ghatti and other polysaccharide thickeners. The invention thus provides acidic emulsified seasonings suitable for cooking with a microwave oven or with heat, or suitable as frozen foods.

### BEST MODE FOR CARRYING OUT THE INVENTION

### (1) Acidic Oil-in-Water Emulsion and Method for Preparing the Same

The acidic oil-in-water emulsions targeted by the invention are prepared by emulsifying ingredients that form a water phase (water-phase ingredients) and ingredients that form an oil phase (oil-phase ingredients) into an oil-in-water emulsion using an emulsifier, with the emulsifier being gum ghatti. That is to say, the acidic oil-in-water emulsions according to the invention are prepared by causing water-phase ingredients and oil-phase ingredients to be emulsified by using the emulsification effect of gum ghatti. The pH of the emulsions is not limited as long as it is acidic, but is typically around 2.5 to 5, and preferably around 2.8 to 4.5.

Gum ghatti, which mainly consists of a polysaccharide obtained by drying an exudate from the tree trunk of *Anogeissus Latifolia WALL.,* is a commercially available gum known as a thickening stabilizer (food additive) (San-Ei Gen F.F.I., Inc. (Japan), for example, is one of its suppliers). Gum ghatti can be typically dissolved in water to a level of about 30 wt% at room temperature to heating temperatures. In this sense, gum ghatti can be defined as a water-phase ingredient.

The amount of gum ghatti used in the acidic oil-in-water emulsion cannot be generalized because it depends on the proportion between the water-phase ingredients and the oil-phase ingredients, but is typically selected from the range of 0.1 to 20 wt%.

In addition to gum ghatti, various other polysaccharide thickeners can be used for preparing the acidic oil-in-water emulsions according to the invention. As used hereinbelow, the term "polysaccharide thickener(s)" refers to polysaccharide thickeners other than gum ghatti. Examples of polysaccharide thickeners include xanthan gum, gum arabic, guar gum, tamarind seed gum, carrageenan, furcellaran, alginates (for example, sodium alginate), tragacanth gum, propylene glycol ester, karaya gum, pullulan, soybean polysaccharides, pectin, carboxymethylcellulose (CMC), etc. Xanthan gum is preferred. The use of xanthan gum with gum ghatti enhances the emulsion stability of the acidic oil-in-water emulsions, while imparting a smoother texture and glossiness to the emulsions. Moreover, the use of xanthan gum with gum ghatti imparts a desired viscosity to the acidic oil-in-water emulsions. In addition, the use of xanthan gum with gum ghatti reduces the amount of gum ghatti used.

When gum ghatti and any of the polysaccharide thickeners mentioned above are used together, the amount of polysaccharide thickener used is not limited, but is typically used in an amount of 1 to 50 wt parts, preferably 5 to 40 wt parts, and more preferably 10 to 30 wt parts, per 100 wt parts of the gum ghatti contained in the acidic oil-in-water emulsion. The amount of polysaccharide thickener used in the acidic oil-in-water emulsion is typically from 0.01 to 1 wt%, preferably 0.05 to 0.5 wt%, and more preferably 0.1 to 0.3 wt%.

Water or water-soluble components can be mentioned as ingredients that form a water phase (water-phase ingredients) of the acidic oil-in-water emulsion. Among the aforementioned polysaccharide thickeners, those which are soluble in water can also be defined as water-phase ingredients. As described later, when the acidic oil-in-water emulsions are prepared as acidic emulsified foods, aqueous food ingredients such as, for example, acidulants are used as water-phase ingredients, in addition to water, gum ghatti, and polysaccharide thickeners. Examples of other optional water-phase ingredients include seasonings such as salt, sodium glutamate and sodium inosinate; sweeteners such as saccharides and high-intensity sweeteners; spices; coloring agents; egg yolks; etc.

Fats and oils, and components soluble in fats and oils can be mentioned as ingredients that form an oil phase (oil-phase ingredients) of the acidic oil-in-water emulsion. Fats and oils are generally classified into fats that are solid at room temperature (for example, 20°C) and oils that are liquid at room temperature. Fats and oils that are liquid at room temperature (for example, 20°C), i.e., oils, are suitable for use as fats and oils according to the invention, and examples of such oils include vegetable oils such as soybean oil, salad oil, olive oil, corn oil, sesame oil, rapeseed oil, cotton seed oil, safflower oil, sunflower seed oil, wheat germ oil, evening primrose oil, castor oil, arachis oil, palm oil, etc. MCT (medium-chain triglycerides), diglyceride and the like, and fats and oils obtained by subjecting vegetable oils as mentioned above to a chemical or enzymatic treatment can also be used. These fats and oils can be used singly or in combination.

As described later, when the acidic oil-in-water emulsions are prepared as acidic emulsified foods, oily food ingredients are used as oil-phase ingredients, such as, for example, oleophilic coloring agents and flavoring agents, in addition to the fats and oils mentioned above.

In the acidic oil-in-water emulsions of the invention, the proportion of oil-phase ingredients to water-phase ingredients (including gum ghatti and/or polysaccharide thickeners) is not limited, but in general, it can be suitably adjusted within the range of 90 to 10 wt% of the oil-phase ingredients relative to 10 to 90 wt% of the water-phase ingredients.

The acidic oil-in-water emulsions according to the invention can be prepared according to a common emulsification method, except for using gum ghatti or gum ghatti and polysaccharide thickeners as emulsifiers. For example, a method that comprises dispersing or dissolving water-phase ingredients other than water in water, adding oil-phase ingredients to the dispersion, and homogenizing the resulting mixture with an emulsifying device such as a homogenizer; and a method that comprises homogenizing water-phase ingredients with an emulsifying device such as a homogenizer, and adding oil-phase ingredients to the mixture and then mixing can be mentioned. Specifically, a method can be mentioned that comprises dissolving or dispersing water-phase ingredients other than water in water; adding oil-phase ingredients to the dispersion; subjecting the resulting mixture to pre-emulsification using a general agitator such as a commercial universal mixer; and subjecting the pre-emulsion to final emulsification with an emulsifying device such as a colloid mill or a TK homomixer. Gum ghatti or gum ghatti and polysaccharide thickeners are added as water-phase ingredients simultaneously when dispersing or dissolving the water-phase ingredients other than water in water.

The acidic oil-in-water emulsions of the invention comprise gum ghatti or gum ghatti and other polysaccharide thickeners such as xanthan gum, which act as emulsifiers that enable oil droplets of oil-phase ingredients to be stably dispersed in the water phase of water-phase ingredients. The average particle size (median particle size) of the oil droplets is not limited, but is typically 20 µm or less, preferably 17 µm or less, and more preferably 0.5 to 10 µm. The average particle size (median particle size) of the oil droplets can be measured using a laser diffraction particle size analyzer.

The acidic oil-in-water emulsions according to the invention preferably have microwave resistance, as described in the Experimental Examples. The term "microwave resistance" refers to resistance to microwave-oven treatment (microwave treatment, ultrashort-wave treatment, or high-frequency treatment), and more specifically, the property of being a stable emulsion when subjected to microwave-oven treatment, with the oil phase and water phase being unlikely to separate. The acidic oil-in-water emulsions can therefore be suitably used as, for example, acidic emulsified foods cooked with a microwave oven (acidic emulsified foods for cooking with a microwave oven), and especially as acidic emulsified seasonings (acidic emulsified seasonings for cooking with a microwave oven).

Moreover, the acidic oil-in-water emulsions according to the invention preferably have heat resistance, as described in the Experimental Examples. The term "heat resistance" refers to resistance to heat treatment, and more specifically, the property of being a stable emulsion when subjected to heat treatment at ordinary pressure, with the oil phase and water phase being unlikely to separate. The acidic oil-in-water emulsions can therefore be suitably used as, for example, acidic emulsified foods prepared by the application of heat (acidic emulsified foods for cooking with heat), and especially as acidic emulsified seasonings (acidic emulsified seasonings for cooking with heat).

In addition, the acidic oil-in-water emulsions according to the invention preferably have freezing and thawing resistance, as described in the Experimental Examples. The term "freezing and thawing resistance" refers to resistance to freezing and thawing, and more specifically, the property of being a stable emulsion when frozen and then thawed, with the oil phase and water phase being unlikely to separate. The acidic oil-in-water emulsions can therefore be suitably used as acidic emulsified foods that are frozen for preservation or like purposes, and thawed for eating, drinking or cooking (acidic emulsified foods for frozen foods), and particularly, acidic emulsified seasonings (acidic emulsified seasonings for frozen foods).

Furthermore, the acidic oil-in-water emulsions of the invention are unlikely to stick to plastic containers.

### (2) Application of Acidic Oil-in-Water Emulsion to Emulsified Food

As explained above, the acidic oil-in-water emulsions according to the invention can be suitably used as acidic emulsified foods. Although such acidic emulsified foods are not limited, acidic emulsified seasonings can be mentioned as preferable examples.

The acidic emulsified seasonings referred to herein include "dressings" as defined in the Japanese Agricultural Standards (JAS) (Notification No. 1821 dated October 7, 2004, of Japanese Ministry of Agriculture, Forestry, and Fisheries).

According to JAS, dressings are defined as semi-solid or oil-in-water emulsion-type seasonings, or separate-liquid seasonings, which are prepared by blending vegetable oils and fats (excluding edible flavoring oils) and vinegar or citrus juices (essential ingredients) with optional ingredients, such as salt, saccharides and spices; as well as seasonings prepared by adding diced pickle and the like to these seasonings. Among these dressings, semi-solid seasonings have a viscosity of 30 Pa·s or more, and emulsion-type seasonings have a viscosity of less than 30 Pa·s. The acidic emulsified seasonings targeted by the invention include, among the aforementioned dressings, semi-solid and emulsion-type seasonings, as well as seasonings prepared by adding diced pickle and the like to these seasonings (for example, tartar sauce).

Moreover, the acidic emulsified seasonings according to the invention include, in addition to the dressings defined in JAS, semi-solid, pasty, and emulsion-type dressings of the oil-in-water type, which comprise vegetable oils and fats and vinegar or citrus juices as essential ingredients, and are emulsified using gum ghatti or gum ghatti and various types of polysaccharide thickeners such as xanthan gum. Uses of the acidic emulsified seasonings are also not limited to addition to salads. Specifically, the acidic emulsified seasonings of the invention include mayonnaise-like seasonings, creamy salad dressing-like seasonings, salad dressing-like seasonings, and French dressing-like seasonings. The definitions of mayonnaise, creamy salad dressings (Notification No. 1821 dated October 7, 2004, of Japanese Ministry of Agriculture, Forestry, and Fisheries), salad dressings, and French dressings (Notification 955 dated October 4, 1975, of Japanese Ministry of Agriculture, Forestry, and Fisheries) according to JAS are as follows.

### Mayonnaise

Mayonnaise is a semi-solid dressing containing egg yolk or whole egg, and made only from essential ingredients, egg yolk, egg white, hydrolyzed protein, salt, saccharides, spices, seasonings, and acidulants.

### Creamy Salad Dressing

A creamy salad dressing is a semi-solid dressing containing egg yolk and starches or thickeners, and made only from essential ingredients, egg yolk, egg white, hydrolyzed protein, salt, saccharides, spices, seasonings, and acidulants.

### Salad Dressing

A salad dressing is a semi-solid dressing containing egg yolk or whole egg and starches, and made only from essential ingredients, egg yolk, egg white, starches, hydrolyzed protein, salt, saccharides, spices, emulsifiers, thickeners, seasonings, and acidulants.

### French Dressing

A French dressing is an emulsion-type dressing containing pepper or paprika, and made only from essential ingredients, pepper, paprika, hydrolyzed protein, salt, saccharides, processed tomato, egg yolk, egg white, spices, flavoring agents, emulsifiers, thickeners, seasonings, acidulants, and antioxidants.

The mayonnaise-like seasonings referred to herein include, among mayonnaises as defined in JAS, those comprising gum ghatti or gum ghatti and other polysaccharide thickeners, and those comprising gum ghatti or gum ghatti and other polysaccharide thickeners while being free of egg yolk or egg white, or containing egg yolk or egg white in amounts that do not exceed a prescribed amount. The creamy salad dressing-like seasonings referred to herein include, among creamy salad dressings as defined in JAS, those comprising gum ghatti or gum ghatti and polysaccharide thickeners, and those comprising gum ghatti or gum ghatti and other polysaccharide thickeners while being free of egg yolk or egg white, or containing egg yolk or egg white in amounts that do not exceed a prescribed amount. The salad dressing-like seasonings referred to herein include, among salad dressings as defined in JAS, those comprising gum ghatti or gum ghatti and other polysaccharide thickeners, and those comprising gum ghatti or gum ghatti and polysaccharide thickeners while being free of egg yolk or egg white, or containing egg yolk or egg white in amounts that do not exceed a prescribed amount.

The French dressing-like seasonings referred to herein include, among French dressings as defined in JAS, those comprising gum ghatti or gum ghatti and other polysaccharide thickeners, and those comprising gum ghatti or gum ghatti and other polysaccharide thickeners while being free of egg yolk or egg white, or containing egg yolk or egg white in amounts that do not exceed a prescribed amount.

These acidic emulsified seasonings typically have a pH of around 2.5 to 5, and particularly a pH of around 2.8 to 4.5.

As described in section (1) concerning the acidic oil-in-water emulsions, the amount of gum ghatti in the acidic emulsified food can be typically selected from 0.1 to 20 wt%; and specifically, it can be suitably selected or adjusted depending on the type of the emulsified food, whether or not to impart shape retention to the food, the viscosity of the food, the presence or absence of egg yolk, the proportion between water-phase ingredients and oil-phase ingredients, and the like.

More specifically, for example, in the case of a semi-solid or pasty acidic emulsified seasoning not containing egg yolk, the amount of gum ghatti incorporated therein can be suitably selected from 0.1 to 10 wt%, preferably 0.5 to 7.5 wt%, and more preferably 1 to 5 wt%. Examples of semi-solid or pasty acidic emulsified seasonings include, but are not limited to, semi-solid dressings, mayonnaise-like seasonings, creamy salad dressing-like seasonings, salad dressing-like seasonings, and tartar sauce. In the case of an emulsion-type acidic emulsified seasoning not containing egg yolk, the amount of gum ghatti incorporated therein can be suitably selected from 0.01 to 10 wt%, preferably 0.05 to 5 wt%, and more preferably 0.1 to 2.5 wt%. Examples of liquid acidic emulsified seasonings include, but are not limited to, emulsion-type dressings and French dressing-like seasonings. These acidic emulsified seasonings can be served as non-cholesterol acidic emulsified seasonings because they do not contain egg yolk, which causes cholesterol.

On the other hand, in the case of a semi-solid or pasty acidic emulsified seasoning (for example, a mayonnaise-like seasoning, a semi-solid dressing, a creamy salad dressing-like seasoning, a salad dressing-like seasoning, or tartar sauce) with a cholesterol content of 20 mg/100 g or less, the amount of gum ghatti incorporated therein can be selected from 0.1 to 20 wt%, preferably 0.5 to 10wt %, and more preferaby 1 to 5 wt%. Among these seasonings, in the case of a low-cholesterol acidic emulsified seasoning with, for example, a cholesterol content of 5 mg/100 g or less, the amount of gum ghatti incorporated therein can be suitably selected from 0.1 to 10 wt%, preferably 0.5 to 7.5 wt%, and more preferably 1 to 5 wt%.

In the case of a liquid acidic emulsified seasoning (for example, an emulsion-type dressing or a French dressing-like seasoning) with a cholesterol content of 20 mg/100 g or less, the amount of gum ghatti incorporated therein can be selected from 0.01 to 10 wt%, preferably 0.05 to 5 wt%, and more preferably 0.1 to 2.5 wt%. Among these seasonings, in the case of a low-cholesterol liquid acidic emulsified seasoning with, for example, a chloesterol content of 5 mg/100 g or less, the amount of gum ghatti incorporated therein can be suitably selected from 0.01 to 10 wt%, preferably 0.05 to 5 wt%, and more preferably 0.1 to 2.5 wt%.

As previously described, the acidic emulsified foods according to the invention may be prepared using gum ghatti together with other polysaccharide thickeners, preferably xanthan gum, as emulsifiers. In this case, the amount of the polysaccharide thickener used is as described above, which is 1 to 50 wt parts, preferably 5 to 40 wt parts, and more preferably 10 to 30 wt parts, per 100 wt parts of the gum ghatti contained in the acidic emulsified food. The amount of polysaccharide thickener in the acidic emulsified food is also as described above, which is typically 0.01 to 1 wt%, preferably 0.05 to 0.5 wt%, and more preferably 0.1 to 0.3 wt%.

The ingredients that form a water phase (water-phase ingredients) of the acidic emulsified foods of the invention and the amounts thereof may be the ingredients and the amounts typically employed in manufacturing acidic emulsified foods, especially acidic emulsified seasonings (dressings) as mentioned above. As an example of a water-phase ingredient typically used, vinegar can be mentioned, in addition to water and gum ghatti or gum ghatti and other polysaccharide thickeners as described above. Moreover, examples of other optional water-phase ingredients include acidulants other than vinegar; seasonings such as salt, sodium glutamate, and sodium inosinate; saccharides and sweeteners such as intensive sweeteners; spices; aqueous coloring agents; egg yolks and egg whites; starches; and hydrolyzed proteins.

Fermented and synthetic vinegars can be mentioned as examples of vinegar. Examples of fermented vinegars include rice vinegar, black vinegar, brown rice vinegar and other grain vinegars; apple vinegar, grape vinegar, persimmon vinegar, balsamico vinegar, and other fruit vinegars; and grain vinegars other than these grain and fruit vinegars. The amount of vinegar added to the acidic emulsified food is typically from 0.05 to 1.2 wt%, preferably 0.1 to 1 wt%, and more preferably 0.2 to 0.8 wt%, when calculated as the amount of pure acetic acid. As acidulants other than vinegar, citric acid and juices of citrus fruits such as *yuzu* citron and lemon can be mentioned.

The amount of salt added to the acidic emulsified food is typically from 0.1 to 10 wt%, preferably 0.5 to 8 wt%, and more preferably 1 to 5 wt%. Examples of seasonings other than salt include disodium 5'-inosinate, disodium 5'-guanylate, sodium L-glutamate, monosodium succinate, disodium succinate, and disodium 5'-ribonucleotide.

Any types of edible saccharides can be used as saccharides. Examples of saccharides include monosaccharides such as glucose, fructose, galactose, mannose, xylose and erythrose, and reducing sugars thereof (for example, sorbitol, xylitol and erythritol); disaccharides such as trehalose, maltose, isomaltose, nigerose, cellobiose, sucrose, and lactose, and reducing sugars thereof (for example, maltitol and lactitol); and corn syrups and high fructose corn syrups. Instead of saccharides or together with saccharides, intensive sweeteners such as sucralose, aspartame, acesulfam potassium, and saccharin can be used. The amount (total amount) of saccharides and sweeteners added to the acidic emulsified food is typically 0.5 to 15 wt%, preferably 1 to 10 wt%, and more preferably 2 to 8 wt%, when calculated as the amount of sugar based on sweetness.

Spices typically used in acidic emulsified seasonings such as, for example, dressings can be optionally used as spices. Examples of spices include white pepper, black pepper, mustard, turmeric, garlic, and paprika.

Egg yolk is an optional ingredient in the acidic emulsified foods of the invention. For example, when the acidic emulsified foods are non-cholesterol or egg allergen-free foods, egg yolk is not used in the preparation. When the acidic emulsified foods are low-cholesterol foods, egg yolk is used in small quantities. For example, in the case of an acidic emulsified food with a cholesterol content of 20 mg/100 g or less, the amount of egg yolk used therein is 1.4 wt% or less per 100 wt% of the acidic emulsified food; and in the case of an acidic emulsified food with a cholesterol content of 5 mg/100 g or less, the amount of egg yolk used therein is 0.3 wt% or less per 100 wt% of the acidic emulsified food.

The ingredients that form an oil phase (oil-phase ingredients) of the acidic emulsified foods of the invention and the amounts thereof may be fats, oils and oleophilic ingredients, and in the amounts typically employed when manufacturing acidic emulsified foods such as the dressings mentioned above. As examples of oil-phase ingredients typically used, vegetable oils and fats, and oleophilic coloring agents and flavoring agents can be mentioned. Oils that are liquid at room temperature (for example, at 20°C) are preferably used as vegetable oils and fats, and examples of such oils include soybean oil, salad oil, olive oil, corn oil, sesame oil, rapeseed oil, cotton seed oil, safflower oil, sunflower seed oil, wheat germ oil, evening primrose oil, castor oil, arachis oil, and palm oil. MCT (medium-chain triglycerides), diglyceride and the like, and fats and oils obtained by subjecting vegetable oils as mentioned above to a chemical or enzymatic treatment can also be used. These fats and oils can be used singly or in combination.

The amount of oils and fats incorporated in the acidic emulsified food is typically 10 to 90 wt%, preferably 20 to 80 wt%, and more preferably 30 to 70 wt%.

The proportion of oil-phase ingredients to water-phase ingredients in the acidic emulsified food of the invention varies depending on the type of the food. For example, in the case of a semi-solid or pasty acidic emulsified seasoning, the proportion of oil-phase ingredients to water-phase ingredients is typically 90 to 10 wt% of oil-phase ingredients relative to 10 to 90 wt% of water-phase ingredients, and preferably 80 to 30 wt% of oil-phase ingredients relative to 20 to 70 wt% of water-phase ingredients. In the case of a liquid acidic emulsified seasoning, the proportion of oil-phase ingredients to water-phase ingredients is typically 50 to 10 wt% of oil-phase ingredients relative to 50 to 90 wt% of water-phase ingredients, and preferably 35 to 10 wt% of oil-phase ingredients relative to 65 to 90 wt% of water-phase ingredients.

The acidic emulsified foods of the invention can be prepared according to known conventional methods for acidic emulsified seasonings such as dressings, except for using gum ghatti, or gum ghatti and other polysaccharide thickeners. For example, a method that comprises dispersing or dissolving water-phase ingredients other than water in water, adding oil-phase ingredients to the dispersion, and homogenizing the resulting mixture with an emulsifying device such as a homogenizer; and a method that comprises homogenizing water-phase ingredients with an emulsifying device such as a homogenizer, and adding oil-phase ingredients to the mixture and then mixing can be mentioned. Specifically, in the case of mayonnaise (a mayonnaise-like seasoning), water-phase ingredients other than water are dissolved or dispersed in water, oil-phase ingredients are added to the dispersion, and the mixture is subjected to pre-emulsification using a general agitator such as, for example, a commercial universal mixer. The pre-emulsion is then subjected to final emulsification with an emulsifier device such as a colloid mill or TK homomixer. Gum ghatti or gum ghatti and other polysaccharide thickeners can be added as water-phase ingredients simultaneously when dispersing or dissolving the water-phase ingredients other than water in water.

The acidic emulsified foods according to the invention, which are prepared by emulsification using gum ghatti or gum ghatti and other polysaccharide thickeners such as xanthan gum as emulsifiers, exhibit microwave resistance, heat resistance, or freezing and thawing resistance, as demonstrated in the Experimental Examples.

Therefore, the acidic emulsified foods of the invention such as, for example, acidic emulsified seasonings, are suitable for cooking with a microwave oven, because they can maintain stable emulsions when subjected to microwave treatment (microwave treatment, ultrashort-wave treatment, or high-frequency treatment), with the oil phase and water phase being unlikely to separate. The acidic emulsified seasonings of the invention are thus suitable for use as sauces, seasonings, and toppings for foods cooked using a microwave oven (foods for cooking with a microwave oven). Examples of foods for cooking with a microwave oven include prepared specialty and filled pastries, delicatessen foods and salads for lunchboxes, *aemono* (Japanese cold dishes mixed with dressings or sauces), stir-fried dishes, pizza, hot dogs, pasta, *takoyaki,* and *okonomiyaki.*

Moreover, the acidic emulsified foods of the invention (for example, acidic emulsified seasonings) are suitable for cooking with heat, because they are resistant to heat treatment, i.e., they can maintain stable emulsions when subjected to heat treatment at ordinary pressure, with the oil phase and water phase being unlikely to separate. Therefore, the acidic emulsified seasonings can be effectively used as sauces, seasonings, and topping for foods prepared by the application of heat (foods for cooking with heat). Examples of foods for cooking with heat include prepared specialty and filled pastries, stir-fried dishes, pizza, hot dogs, pasta, *takoyaki,* and *okonomiyaki.*

Furthermore, the acidic emulsified foods of the invention (acidic emulsified seasonings) are resistant to freezing and thawing, i.e., they can maintain stable emulsions when subjected to freezing and thawing, with the oil phase and water phase being unlikely to separate. Therefore, the acidic emulsified seasonings can be effectively used as sauces, seasonings, and toppings for foods that are frozen and then thawed for eating, drinking or cooking. Examples of frozen foods include delicatessen foods and salads for lunchboxes, cold pasta, and *aemono.*

### (3) Method for Imparting or Enhancing Microwave Resistance or Heat Resistance

The invention provides a method for imparting microwave resistance or heat resistance to an acidic emulsified food obtained by emulsifying water-phase ingredients and oil-phase ingredients into an oil-in-water emulsion, and especially an acidic emulsified seasoning; or a method for enhancing any of these properties of such an acidic emulsified food. The term "microwave resistance" refers to resistance to microwave-oven treatment, and more specifically, the property of being a stable emulsion when subjected to microwave treatment, with the oil phase and water phase being unlikely to separate. The term "heat resistance" refers to resistance to heat treatment, and more specifically, the property of being a stable emulsion when subjected to heat treatment at ordinary pressure, with the oil phase and water phase being unlikely to separate.

These methods can be accomplished by using gum ghatti as an ingredient of acidic emulsified foods. More specifically, these methods can be carried out by using gum ghatti as an emulsifier in preparing an acidic emulsified food in which water-phase ingredients and oil-phase ingredients are emulsified to form an oil-in-water emulsion.

The types of acidic emulsified foods targeted by the invention, the types of water-phase ingredients and oil-phase ingredients used in the preparation thereof, and the proportions of these ingredients, as well as the amounts of gum ghatti used in these foods are as described in sections (1) and (2).

In addition to gum ghatti, various other polysaccharide thickeners can also be used. Examples of polysaccharide thickeners include xanthan gum, gum arabic, guar gum, tamarind seed gum, carrageenan, furcellaran, alginates, tragacanth gum, propylene glycol ester, karaya gum, pullulan, soybean polysaccharides, pectin, carboxymethylcellulose (CMC), etc. Xanthan gum is preferred. The proportions of polysaccharide thickeners to gum ghatti when they are used together, and the proportions of the polysaccharide thickeners used in the acidic emulsified food are as described in sections (1) and (2).

By emulsifying water-phase ingredients and oil-phase ingredients according to a method as explained in sections (1) and (2) using gum ghatti or gum ghatti and polysaccharide thickeners such as xanthan gum, microwave resistance or heat resistance can be imparted to acidic emulsified foods, or the microwave-oven resistance or heat resistance of acidic emulsified foods can be enhanced, as demonstrated in the Experimental Examples. That is to say, the method according to the invention is a method for preventing the qualities of acidic emulsified foods, and particularly acidic emulsified seasonings, from deteriorating even when they are cooked with a microwave oven or heated. Therefore, the acidic emulsified seasonings which are given microwave-oven resistance or heat resistance, or those in which these properties are enhanced, by the method of the invention, can be suitably used as seasonings for foods cooked with a microwave oven (foods for cooking with a microwave) or foods prepared by the application of heat (foods for cooking with heat).

### (4) Method for Imparting or Enhancing Freezing and Thawing Resistance

The invention provides a method for imparting freezing and thawing resistance to an acidic emulsified food obtained by emulsifying water-phase ingredients and oil-phase ingredients into an oil-in-water emulsion, and particularly an acidic emulsified seasoning; or a method for enhancing the freezing and thawing resistance of such an acidic emulsified food. The term "freezing and thawing resistance" refers to resistance to freezing and thawing, and more specifically, the property of being a stable emulsion when frozen and thawed, with the oil phase and water phase being unlikely to separate.

These methods can be accomplished by using gum ghatti as an ingredient of acidic emulsified foods. More specifically, these methods can be carried out by using gum ghatti as an emulsifier in preparing an acidic emulsified food in which water-phase ingredients and oil-phase ingredients are emulsified to form an oil-in-water emulsion.

The types of acidic oil-in-water emulsified foods targeted by the invention, the types of water-phase ingredients and oil-phase ingredients used in the preparation thereof, and the proportions of these ingredients, as well as the amounts of ghatti gum used in these foods are as described in sections (1) and (2).

In addition to gum ghatti, various other polysaccharide thickeners can also be used. Examples of polysaccharide thickeners include xanthan gum, gum arabic, guar gum, tamarind seed gum, carrageenan, furcellaran, alginates, tragacanth gum, propylene glycol ester, karaya gum, pullulan, soybean polysaccharides, pectin, carboxymethylcellulose (CMC), etc. Xanthan gum is preferred. The proportions of polysaccharide thickeners to gum ghatti when they are used together, and the proportions of the polysaccharide thickeners used in the acidic emulsified foods are as described in sections (1) and (2).

By emulsifying water-phase ingredients and oil-phase ingredients according to a method as explained in sections (1) and (2) using gum ghatti or gum ghatti and polysaccharide thickeners such as xanthan gum as water-phase ingredients, freezing and thawing resistance can be imparted to acidic emulsified foods, or the freezing and thawing resistance of acidic emulsified foods can be enhanced, as demonstrated in the Experimental Examples. That is to say, the method according to the invention is a method for preventing the qualities of acidic emulsified foods, and particularly acidic emulsified seasonings, from deteriorating even when they are frozen and thawed. Therefore, the acidic emulsified seasonings which are given freezing and thawing resistance, or those in which the freezing and thawing resistance is enhanced, by the method of the invention, can be suitably used as seasonings for frozen foods.

### EXAMPLES

The best mode for carrying out the invention will be described in detail below with reference to the Experimental Examples, Examples and Comparative Examples shown below. The invention, however, is by no means limited to these Examples. In the formulations, "part(s)" refers to "part(s) by weight", and "%" refers to "% by weight", unless otherwise specified.

### Experimental Example 1

(1) Acidic Emulsified Seasonings (Low-Cholesterol or Non-Cholesterol)
Acidic emulsified seasonings of the compositions listed in Table 1 shown below (Comparative Examples 1 to 10 and Examples 1 to 10) were prepared. Specifically, a gum (gum ghatti, xanthan gum, or gum arabic) (Ex. 1 to 10, Comp. Ex. 3 to 4, and Comp. Ex. 7 to 10) or a modified starch (Comp. Ex. 5, 6) was dissolved in water. Fermented vinegar, sugar, salt, and sodium L-glutamate were added to the solution, and the resulting mixture was agitated. In Comparative Examples 1 to 3, 6, 9 and 10, and Examples 9 and 10, egg yolk was subsequently added and mixed homogeneously. To this mixture, which forms a water phase, a salad oil was added and agitated for 5 minutes to form a pre-emulsion. The pre-emulsion was then subjected to final emulsification using a colloid mill (clearance: 10/1000 inch, rotation speed: 3000 rpm) to prepare an acidic oil-in-water emulsified seasoning (pH 4).

**Table 1**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|---|---|---|
| Salad oil | 70 | 70 | 70 | 70 | 70 | 70 | 70 | 70 | 70 | 70 |
| Egg yolk | 10 | 2 | 1 | 0 | 0 | 1 | 0 | 0 | 1 | 1 |
| Fermented vinegar | 4.8 | 4.8 | 4.8 | 4.8 | 4.8 | 4.8 | 4.8 | 4.8 | 4.8 | 4.8 |
| Sugar | 2.5 | 2.5 | 2.5 | 2.5 | 2.5 | 2.5 | 2.5 | 2.5 | 2.5 | 2.5 |
| Salt | 1.5 | 1.5 | 1.5 | 1.5 | 1.5 | 1.5 | 1.5 | 1.5 | 1.5 | 1.5 |
| Sodium L-glutamate | 0.05 | 0.05 | 0.05 | 0.05 | 0.05 | 0.05 | 0.05 | 0.05 | 0.05 | 0.05 |
| Gum ghatti | - | - | - | - | - | - | - | - | - | - |
| Xanthan gum | - | - | 0.15 | 0.15 | - | - | - | 0.15 | - | 0.15 |
| Gum Arabic | - | - | - | - | - | - | 2 | 2 | 2 | 2 |
| Modified starch | - | - | - | - | 2 | 2 | - | - | - | - |
| Water | 11.15 | 19.15 | 20 | 21 | 19.15 | 18.15 | 19.15 | 19 | 18.15 | 18 |
| Total | 100 | 100 | 100 | 100 | 100 | 100 | 100 | 100 | 100 | 100 |

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Salad oil | 70 | 70 | 70 | 70 | 70 | 70 | 70 | 70 | 70 | 70 |
| Egg yolk | 0 | 0 | 0 | 0 | 0 | 0 | 0 | 0 | 1 | 1 |
| Fermented vinegar | 4.8 | 4.8 | 4.8 | 4.8 | 4.8 | 4.8 | 4.8 | 4.8 | 4.8 | 4.8 |
| Sugar | 2.5 | 2.5 | 2.5 | 2.5 | 2.5 | 2.5 | 2.5 | 2.5 | 2.5 | 2.5 |
| Salt | 1.5 | 1.5 | 1.5 | 1.5 | 1.5 | 1.5 | 1.5 | 1.5 | 1.5 | 1.5 |
| Sodium L-glutamate | 0.05 | 0.05 | 0.05 | 0.05 | 0.05 | 0.05 | 0.05 | 0.05 | 0.05 | 0.05 |
| Gum ghatti | 0.25 | 0.5 | 1 | 2 | 0.25 | 0.5 | 1 | 2 | 2 | 2 |
| Xanthan gum | - | - | - | - | 0.15 | 0.15 | 0.15 | 0.15 | - | 0.15 |
| Gum Arabic | - | - | - | - | - | - | - | - | - | - |
| Water | 20.9 | 20.65 | 20.15 | 19.15 | 20.75 | 20.5 | 20 | 19 | 18.15 | 18 |
| Total | 100 | 100 | 100 | 100 | 100 | 100 | 100 | 100 | 100 | 100 |

(2) Each of the emulsified seasonings thus prepared (Comp. Ex. 1 to 10 and Ex. 1 to 10) was tested for (A) emulsion stability, (B) microwave resistance and heat resistance, and (C) freezing and thawing resistance, according to the procedures described below.
(A) Emulsion Stability Tests
Thirty grams each of the emulsified seasonings (Comp. Ex. 1 to 10 and Ex. 1 to 10) were weighed out into a 50 ml vial with a threaded cap, and stored in a thermostat at 60°C for three days. After storage, the samples were examined for oil separation, and their emulsion stability was rated on the following scale.
Rating of Emulsion Stability
A: No oil separation
B: A small number of droplets on the liquid surface
C: Oil slightly separated
D: Oil completely separated

(B) Microwave Resistance and Heat Resistance Tests
Thirty grams each of the emulsified seasonings (Comp. Ex. 1 to 10 and Ex. 1 to 10) were weighed out into a 100 ml beaker, and the beakers were covered with plastic wrap and heated in a microwave oven at 600 W for 60 seconds. After heating, the samples were examined for oil separation, and their microwave resistance and heat resistance were rated on the following scale.
Rating of Microwave Resistance and Heat-Resistance
A: No oil separation
B: A small number of droplets on the liquid surface
C: Oil slightly separated
D: Oil completely separated

(C) Freezing and Thawing Resistance Tests
Thirty grams each of the emulsified seasonings (Comp. Ex. 1 to 10 and Ex. 1 to 10) were weighed out into a 50 ml vial with a threaded cap, and stored in a freezer at -20°C for a day and then thawed at room temperature. The samples were externally examined for oil separation, and their freezing and thawing resistance was rated on the following scale.
Rating of Freezing and Thawing Resistance
A: No oil separation
B: A small number of droplets on the liquid surface
C: Oil slightly separated
D: Oil completely separated
The results are shown in Table 2.

**Table 2**

| | Gum ghatti (%) | Gum arabic (%) | Xanthan gum (%) | Egg yolk and/or other emulsifier | Storage stability test (stored at 60°C days) | Freezing and thawing resistance test (frozen at -20°C for a day, and then thawed) | Microwave-oven resistance (600 W, 600 s) |
|---|---|---|---|---|---|---|---|
| Comp. Ex. 1 | - | - | - | Egg yolk: 10% | B-A | D | D |
| Comp. Ex. 2 | - | - | - | Egg yolk: 2% | C | D | D |
| Comp. Ex. 3 | - | - | 0.15 | Egg yolk: 1% | C | D | D |
| Comp. Ex. 4 | - | - | 0.15 | - | D | D | D |
| Comp. Ex. 5 | - | - | - | Modified starch: 2% | D | D | D |
| Comp. Ex. 6 | - | - | - | Egg yolk: 1% Modified starch: 2% | D | D | D |
| Comp. Ex. 7 | - | 2.0 | - | - | C-B | D-C | D-C |
| Comp. Ex. 8 | - | 2.0 | 0.15 | - | C-B | D-C | D-C |
| Comp. Ex. 9 | - | 2.0 | - | Egg yolk: 1% | C-B | D-C | D-C |
| Comp. Ex. 10 | - | 2.0 | 0.15 | Egg yolk: 1% | C-B | D-C | D-C |
| Ex. 1 | 0.25 | - | - | - | C-B | C | C |
| Ex. 2 | 0.5 | - | - | - | B | C | C-B |
| Ex. 3 | 1.0 | - | - | - | B | C | B |
| Ex. 4 | 2.0 | - | - | - | B-A | B | B-A |
| Ex. 5 | 0.25 | - | 0.15 | - | B | C | C |
| Ex. 6 | 0.5 | - | 0.15 | v | B | C | C-B |
| Ex. 7 | 1.0 | - | 0.15 | - | B | C-B | B |
| Ex. 8 | 2.0 | - | 0.15 | - | B-A | B | B-A |
| Ex. 9 | 2.0 | - | - | Egg yolk: 1% | B-A | B | B-A |
| Ex. 10 | 2.0 | - | 0.15 | Egg yolk: 1% | B-A | B | B-A |

| | | | | | | | |
|---|---|---|---|---|---|---|---|
| In the table, the "-" symbol means that it was impossible to clearly determine between the two ratings from the appearance. | | | | | | | |

These results show that by using gum ghatti or gum ghatti and xanthan gum, the emulsion stability of acidic emulsified seasonings can be enhanced, and microwave resistance (heat resistance) and freezing and thawing resistance can be imparted to acidic emulsified seasonings (Ex. 1 to 10). Also, by using gum arabic or gum arabic and xanthan gum, small improvements were imparted in microwave resistance (heat resistance) and freezing and thawing resistance; however, gum ghatti exhibited an effect equal to or greater than that provided by gum arabic when used in one-eighth the quantity of gum arabic (Example 1 and Comparative Example 7). This shows that gum ghatti is markedly superior to gum arabic in improving the emulsion stability of acidic emulsified seasonings, and that gum ghatti acts to impart microwave-oven resistance (heat resistance) and freezing and thawing resistance to (or enhance these properties of) acidic emulsified seasonings.
(3) The median size (average particle size of oil droplets) and the viscosity were measured for each of the emulsified seasonings according to Comparative Example 1, and Examples 2 to 4 and 6 to 10 among the emulsified seasonings prepared above. Moreover, the external appearance of these samples was examined, and the samples were consumed to evaluate their texture. The results are shown in Table 3. Median size was measured using a laser diffraction particle size analyzer, SALD-1100 (manufactured by Shimadzu Corp.). Viscosity was measured using a B-type rotary viscometer (manufactured by Toki Sangyo Co., Ltd ), equipped with a rotor No. 4, at about 25°C and 6 rpm.

**Table 3**

| | Gum ghatti (%) | Xanthan gum (%) | Egg yolk and/or other emulsifier | Median size (µm) | Viscosity (CP) | External appearance | Texture evaluation |
|---|---|---|---|---|---|---|---|
| Comp. Ex. 1 | - | - | Egg yolk: 10% | 3.30 | 42,000 | Shape retention exhibited | Mild and rich |
| Ex. 2 | 0.5 | - | - | 16.7 | 19,700 | No shape retention exhibited | Creamy, light texture |
| Ex. 3 | 1.0 | - | - | 9.77 | 36,900 | Slight degree of shape retention exhibited | Creamy, light texture |
| Ex. 4 | 2.0 | - | - | 4.91 | 96,000 | Shape retention exhibited | Creamy, light texture |
| Ex. 6 | 0.5 | 0.15 | - | 13.3 | 56,900 | Shape retention exhibited | Creamy but a slightly oily aftertaste |
| Ex. 7 | 1.0 | 0.15 | - | 7.79 | 95,100 | Shape retention exhibited | Creamy, light texture |
| Ex. 8 | 2.0 | 0.15 | - | 4.28 | 100,000 or more | Shape retention exhibited | Creamy, light texture |
| Ex. 9 | 2.0 | - | Egg yolk: 1% | 12.0 | 9,400 | No shape retention exhibited | Creamy texture |
| Ex. 10 | 2.0 | 0.15 | Egg yolk 1% | 16.2 | 22,000 | No shape retention exhibited | Creamy texture |

The aforementioned results establish that by using relatively small amounts of gum ghatti, emulsified seasonings in the form of liquid dressings with no shape retention can be prepared; and by increasing the amounts of gum ghatti, emulsified seasonings in the form of semi-solid or pasty mayonnaises with shape retention can be prepared. Moreover, it can be seen that seasonings in the form of semi-solid mayonnaises with shape retention can also be prepared using gum ghatti together with xanthan gum, instead of increasing the amounts of gum ghatti.

### Experimental Example 2

(1) Acidic Emulsified Seasonings Containing 55% Oil (Non-Cholesterol)
Acidic emulsified seasonings of the compositions listed in Table 4 shown below were prepared. Specifically, a gum (gum ghatti, xanthan gum, or gum arabic) (Comp. Ex. 11, 12, 14, and 15, and Ex. 11, 12) or a modified starch (Comp. Ex. 13) was dissolved in water. Fermented vinegar, sugar, salt, and sodium L-glutamate were added to the solution, and the resulting mixture was agitated. In Comparative Example 12, egg yolk was subsequently added and mixed homogeneously. To this mixture, which forms a water phase, a salad oil was added and agitated for 5 minutes to form a pre-emulsion. The pre-emulsion was then subjected to final emulsification using a colloid mill (clearance: 10/1000 inch, rotation speed: 3000 rpm) to prepare an acidic emulsified seasoning (pH 4).

**Table 4**

| | Comp. Ex. 11 | Comp. Ex. 12 | Comp. Ex. 13 | Comp. Ex. 14 | Comp. Ex. 15 | Ex. 11 | Ex. 12 |
|---|---|---|---|---|---|---|---|
| Salad oil | 55 | 55 | 55 | 55 | 55 | 55 | 55 |
| Egg yolk | - | 10 | - | - | - | - | - |
| Fermented vinegar | 4.8 | 4.8 | 4.8 | 4.8 | 4.8 | 4.8 | 4.8 |
| Sugar | 5 | 5 | 5 | 5 | 5 | 5 | 5 |
| Salt | 3 | 3 | 3 | 3 | 3 | 3 | 3 |
| Sodium L-glutamate | 0.05 | 0.05 | 0.05 | 0.05 | 0.05 | 0.05 | 0.05 |
| Gum ghatti | - | - | - | - | - | 1 | 2 |
| Xanthan gum | 0.2 | 0.2 | 0.2 | 0.2 | 0.2 | 0.2 | 0.2 |
| Gum arabic | - | - | - | 1 | 2 | - | - |
| Modified starch | - | - | 2 | - | - | - | - |
| Water | 46.1 | 36.1 | 44.1 | 45.1 | 44.1 | 45.1 | 44.1 |
| Total | 100.0 | 100.0 | 100.0 | 100.0 | 100.0 | 100.0 | 100.0 |

(3) The median size (average particle size of oil droplets) and viscosity were measured for each of the emulsified seasonings prepared above (Comp. Ex. 11 to 15 and Ex. 11, 12). Moreover, the external appearance of these samples was examined, and the samples were consumed to evaluate their texture. The results are shown in Table 5. Median size was measured using a laser diffraction particle size analyzer, SALD-1100 (manufactured by Shimadzu Corp.). Viscosity was measured using a B-type rotary viscometer (manufactured by Toki Sangyo Co., Ltd), equipped with a rotor No. 4, at about 25°C and 6 rpm.

**Table 5**

| | Gum ghatti (%) | Gum arabic (%) | Xanthan gum (%) | Egg yolk and/or other emulsifier | Median size (µm) | Viscosity (CP) | External appearance | Texture evaluation |
|---|---|---|---|---|---|---|---|---|
| Comp. Ex. 11 | - | - | 0.2 | - | 18.2 | 17,900 | Oil phase slightly separated | Very oily |
| Comp. Ex. 12 | - | - | 0.2 | Egg yolk: 10% | 3.20 | 30,000 | Slight degree of shape retention exhibited | Mild and creamy |
| Camp. Ex. 13 | - | - | 0.2 | Modified starch: 2% | 17.5 | 21,000 | Oil phase slightly separated | Very oily |
| Comp. Ex. 14 | - | 1.0 | 0.2 | - | 11.7 | 12,500 | No shape retention exhibited | Somewhat oily |
| Comp. Ex. 15 | - | 2.0 | 0.2 | - | 8.57 | 20,100 | No shape retention exhibited | Creamy but a slightly oily aftertaste |
| Ex. 11 | 1.0 | - | 0.2 | - | 5.38 | 19,200 | No shape retention exhibited | Creamy, light texture |
| Ex. 12 | 2.0 | - | 0.2 | - | 3.55 | 37,000 | Slight degree of shape retention exhibited | Creamy, light texture |

(3) Each of the emulsified seasonings (Comp. Ex. 11 to 15 and Ex. 11 and 12) was tested for (A) emulsion stability, (B) microwave-oven resistance and heat resistance, and (C) freezing and thawing resistance, according to the same procedures as described in Experimental Example 1. The results are shown in Table 6.

**Table 6**

| | Gum ghatti (%) | Gum arabic (%) | Xanthan gum (%) | Egg yolk and/or other emulsifier | Storage stability test (stored at 60°C for 3 days) | Freezing and thawing resistance test (frozen at -20°C for a day, and then thawed) | microwave-oven resistance (600 W, 600 s) |
|---|---|---|---|---|---|---|---|
| Comp. Ex. 11 | - | - | 0.2 | - | D | D | D |
| Comp. Ex. 12 | - | - | 0.2 | Egg yolk: 10% | A | D | B |
| Comp. Ex. 13 | - | - | 0.2 | Modified starch: 2% | D | D | D |
| Comp. Ex. 14 | - | 1.0 | 0.2 | - | C | C | C |
| Comp. Ex. 15 | - | 2.0 | 0.2 | - | B | B | B |
| Ex. 11 | 1.0 | - | 0.2 | - | B | C | B |
| Ex. 12 | 2.0 | - | 0.2 | - | A | B | A |

The results presented above show that even when the amounts of the oil used are reduced, emulsified seasonings in the form of semi-solid mayonnaises which exhibit shape retention can be prepared by using gum ghatti and xanthan gum together.

As can be seen from the results of Experimental Examples 1 and 2, usual mayonnaise (Comp. Ex. 1) cannot be used as a frozen food or food for cooking with heat (for cooking with a microwave oven) because it undergoes oil-phase separation due to freezing and thawing, or heating. In contrast, the mayonnaise-like seasonings of the invention which were emulsified using gum ghatti or gum ghatti and xanthan gum maintained their emulsion state without oil-phase separation after freezing and then thawing, and also maintained their emulsion state without oil-phase separation after microwave cooking. That is to say, the acidic emulsified foods according to the invention, such as mayonnaise-like seasonings, exhibit freezing and thawing resistance and microwave resistance (heat resistance), and hence can be effectively used as frozen foods, foods for cooking with a microwave oven, and foods for cooking with heat.

## Claims

1. An acidic oil-in-water emulsion comprising gum ghatti.

2. The acidic oil-in-water emulsion according to claim 1, further comprising xanthan gum.

3. The acidic oil-in-water emulsion according to claim 1, comprising 10 to 90 wt% of a fat or an oil.

4. The acidic oil-in-water emulsion according to claim 1, having a pH of 2.5 to 5.

5. The acidic oil-in-water emulsion according to claim 1, having a median size of 20 µm or less.

6. The acidic oil-in-water emulsion according to claim 1, comprising a food ingredient.

7. The acidic oil-in-water emulsion according to claim 1, comprising a seasoning ingredient.

8. An acidic oil-in-water emulsified food comprising an acidic oil-in-water emulsion as defined in claim 1.

9. The acidic oil-in-water emulsified food according to claim 8, which is an acidic emulsified seasoning.

10. The acidic emulsified food according to claim 8, which is a liquid, semi-solid, or pasty acidic emulsified seasoning.

11. The acidic oil-in-water emulsified food according to claim 8, which is an emulsified dressing.

12. The acidic oil-in-water emulsified food according to claim 8, having a cholesterol content of 0 to 20 mg/100 g.

13. The acidic oil-in-water emulsified food according to claim 8, having a cholesterol content of 0 to 5 mg/100 g.

14. The acidic oil-in-water emulsified food according to claim 8, which is free of cholesterol.

15. The acidic oil-in-water emulsified food according to claim 8, which exhibits microwave resistance and heat resistance, and is used for cooking with a microwave oven or cooking with heat.

16. The acidic oil-in-water emulsified food according to claim 15, which is an acidic emulsified seasoning.

17. A food for cooking with a microwave oven or cooking with heat comprising an acidic oil-in-water emulsified food as defined in claim 15.

18. The acidic oil-in-water emulsified food according to claim 8, which exhibits freezing and thawing resistance, and is used as a frozen food.

19. The acidic oil-in-water emulsified food according to claim 18, which is an acidic emulsified seasoning.

20. A frozen food comprising an acidic oil-in-water emulsified food as defined in claim 18.

21. A method for preparing an acidic oil-in-water emulsified food which exhibits microwave resistance, heat resistance, or freezing and thawing resistance, comprising using gum ghatti or gum ghatti with another polysaccharide thickener as emulsifiers in preparing an acidic oil-in-water emulsified food in which a water-phase ingredient and an oil-phase ingredient are emulsified to form an oil-in-water emulsion.

22. A method for imparting microwave or heat resistance to or enhancing the microwave or heat resistance of an acidic oil-in-water emulsified food in which a water-phase ingredient and an oil-phase ingredient are emulsified to form an oil-in-water emulsion, comprising using gum ghatti or gum ghatti with another polysaccharide thickener as emulsifiers.

23. A method for imparting freezing and thawing resistance to or enhancing the freezing and thawing resistance of an acidic oil-in-water emulsified food in which a water-phase ingredient and an oil-phase ingredient are emulsified to form an oil-in-water emulsion, comprising using gum ghatti or gum ghatti with another polysaccharide thickener as emulsifiers.
